# EUROPÄISCHE PATENTANMELDUNG

(11) **EP 1 037 453 A2**
(43) Veröffentlichungstag der Anmeldung: **20.09.2000**
(21) Anmeldenummer: 00105727.2
(22) Anmeldetag: 17.03.2000
(51) Int. Cl.: H04M 3/487

(54) **Verfahren zum Verteilen von Informationen an eine Auswahl von Teilnehmern in einem Telekommunikationsnetz**

(30) Priorität: 18.03.1999 DE 19912238
(71) Anmelder: SIEMENS AKTIENGESELLSCHAFT, 80333 München (DE)
(72) Erfinder: Simeonov, Plamen, 10117 Berlin (DE); Piprek, Helena, 10117 Berlin (DE)

(57) **Zusammenfassung**

Ein Informationsdienst wird durch das Auftreten eines definierten Ereignisses (ein sogenanntes Event) ausgelöst. Dieses Ereignis geschieht außerhalb des Telekommunikationssystems. In einer geeigneten Datenbank werden zu dem Ereignis gehörende Daten über die betroffenen Teilnehmer herausgesucht, insbesondere Kommunikationsinformationen wie eine Mobilfunk-Telefonnummer. Aus dieser Kommunikationsinformation wird dann eine Auftragsliste erstellt, und es wird veranlasst, daß zu den betroffenen Teilnehmern anhand der Kommunikationsinformation eine Verbindung aufgebaut wird.

## Beschreibung

### Fachgebiet der Erfindung

Die Erfindung betrifft ein Verfahren zum Verteilen von Informationen über ein Telefonnetz.
Die Anzahl der Teilnehmer in den Telekommunikationsnetzen nimmt stetig zu. Insbesondere die Nutzer der Mobilfunknetze sind oftmals sehr viel unterwegs und daher mit bestimmten Informationen ansonsten nur schwer erreichbar.
Andererseits gibt es bestimmte Situationen, in denen es günstig ist, spezielle, aktuelle Informationen an bestimmte Personen verteilen zu können, deren Aufenthaltsort unbekannt sein kann.

Ein Beispiel für solche Informationen sind Reiseinformationen: Abfahrts-/flugzeiten, Verzögerungen, Verspätungen, Änderung des Abflugterminals oder des Bahnsteigs etc.
Bisher ist eine Suche nach solchen Informationen mühsam. Es gibt verschiedene Angebote wie Videotext, Internet oder Telefonauskunft, die ein Reisender selber abfragen kann. Weiterhin sind diese Informationen nur temporär gültig. Oftmals sind diese Informationen auch nur dann interessant, wenn sich etwas ändert, wenn sich beispielsweise die Abflugzeit um 1 Stunde verschiebt.

### Stand der Technik

Durch den Einsatz von Call Centern kann eine solche Funktionalität bereits angeboten werden. Ein entsprechender Informationsdienst ist aber nur teilweise automatisiert, da die Verbindung zu den einzelnen Teilnehmern von den Call Center Mitarbeitern aufgebaut werden müssen. Daher ist diese Lösung mit Personalaufwand und hohen Kosten verbunden.

Ein Telefon- oder Faxabruf muß von dem Teilnehmer selber ausgelöst werden. Solche Informationsdienste sind auch häufig sprachenabhängig und personenabhängig.
Eine sogenannte 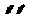 Off-Line"-Abfrage, beispielsweise eine menügesteuerte Ansagefunktion, bietet keinen effizienten Zugriff auf die gewünschten Informationen sondern oftmals wenig benutzerfreundliche, komplizierte Menüs.

Es soll das Problem gelöst werden, aktuelle Informationen zu einem geeigneten Zeitpunkt an einen ausgewählten Teilnehmerkreis in einem Telekommunikationsnetz zu verteilen.
Aufgabe der Erfindung ist es, das Verfahren der Informationsverteilung zu automatisieren.

### Darstellung der Erfindung

Diese Aufgabe wird gelöst durch ein Verfahren gemäß Patentanspruch 1 und eine Vorrichtung gemäß Patentanspruch 10.

Das erfindungsgemäße Verfahren wird durch das Auftreten eines definierten Ereignisses (ein sogenanntes Event) ausgelöst. Dieses Ereignis geschieht außerhalb des Telekommunikationssystems. In einer geeigneten Datenbank werden zu dem Ereignis gehörende Daten über die betroffenen Teilnehmer herausgesucht, insbesondere Kommunikationsinformationen wie eine Mobilfunk-Telefonnummer. Aus dieser Kommunikationsinformation wird dann eine Auftragsliste erstellt, und es wird veranlasst, daß zu den betroffenen Teilnehmern anhand der Kommunikationsinformation eine Verbindung aufgebaut wird.

Das beschriebene Verfahren und die Vorrichtung ermöglichen einen zentralen, effizienten Zugriff auf 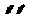 Echtzeit"-Daten, die auch ortsabhängig sein können.
Eine Mobiltelefonnutzung wird so für Teilnehmer noch attraktiver, da sie eine erweiterte Dienstfunktionalität angeboten bekommen.

Vorteilhafte Ausgestaltungen und Weiterbildungen sind in den Unteransprüchen angegeben.

In einer vorteilhafte Ausgestaltungsform wird dem Teilnehmer eine vorbereitete Text- oder Sprachnachricht nach dem Verbindungsaufbau direkt übermittelt. Diese Nachricht kann mit dem auslösenden Ereignis inhaltlich identisch sein, beispielsweise eine Ansage oder Anzeige.
Wenn ein erster Verbindungsaufbau mit dem Teilnehmer anhand der in der Auftragsliste enthaltenen Kommunikationsinformation nicht möglich ist, ist es vorteilhaft, wenn das System weitere Möglichkeiten des Verbindungsaufbaus anbietet, beispielsweise eine alternative Rufnummer, eine Mailbox oder ähnliches.

Die Auftragsliste kann beliebige zusätzliche Informationen enthalten. Wenn ein Zeitstempel vorhanden ist, also eine Angabe darüber, wann das auslösende Ereignis eingetreten ist oder wann der Eintrag in der Auftragsliste erfolgt ist, dann können Folgeaktionen diese Zeitangabe verwenden. Eine Stornierung eines Buchungsauftrages kann beispielsweise nur innerhalb der ersten 14 Tage nach Buchung möglich sein.

Das auslösende Ereignis für den Informationsdienst kann der betroffene Teilnehmer selber darstellen, indem er eine Dienstenummer anwählt und somit den Informationsdienst selber aktiviert. Die erwünschte Antwort, also die abgefragte Information, kann dann on-line, oder auch off-line, also nach einem erneuten Verbindungsaufbau, übertragen werden.
Es ist weiterhin günstig, wenn die von dem Teilnehmer durchgeführten Aktionen statistisch erfaßt und ausgewertet werden können. Bei einem erneuten Zugriff auf den Dienst kann dann bereits ein oft gewünschter Dienst vorbelegt und angeboten werden.

Weiterhin wird eine Vorrichtung beansprucht zur Durchführung des Verfahrens in Patentanspruch 1.

Die Vorrichtung enthält insbesondere eine Überwachungseinheit EÜE, die den Eintritt eines bestimmten Ereignisses erwartet, um den erfindungsgemäßen Dienst auszuführen. Weiterhin müssen Speichermittel vorhanden sein, die die benötigten TeilnehmerInformationen, insbesondere die Kommunikationsinformationen enthalten. Übertragungsmittel ermöglichen dann das Bearbeiten der zuvor erzeugten Auftragsliste und den Verbindungsaufbau zum den betroffenen Teilnehmern.

### Kurzbeschreibung der Zeichungen

Im folgenden wird die Erfindung anhand von Ausführungsbeispielen erläutert. Dabei zeigen
- Figur 1: ein Beispiel für einen Event-gesteuerten Informationsdienst,
- Figur 2: den Informationsaustausch zwischen SCR, HLR und VLR,
- Figur 3: ein Beispiel für den Informationsdienst on-demand und
- Figur 4: eine erweiterte Version des enfindungsgemäßen Dienstes.

### Beschreibung der bevorzugten Ausgestaltungsformen

Eine Realisierung ist in einem Mobilfunknetz oder PSTN beispielsweise durch die Technik der Intelligenten Netze IN möglich. In den folgenden Ausführungsbeispielen wird auf diese Architektur zurückgegriffen, die in den ITU Normen Q.1200 ff. definiert ist.
Die einzelnen Module werden mit den folgenden Abkürzungen bezeichnet, die aus der GSM- und IN-Technik bereits bekannt sind:
- VLR:: Visitor Location Register (Besuchsverzeichnis, bei GSM verwendet)
- HLR:: Home Location Register (Heimatverzeichnis, ebenfalls GSM)
- SCF:: Service Control Function (Dienstesteuerfunktion)
- SDF:: Service Data Function
- SRF:: Service Resource Function
- SSF:: Service Switching Function
- SMS:: Short Message Service
- GWF:: Gateway Function
- CSC:: Customer Service Control

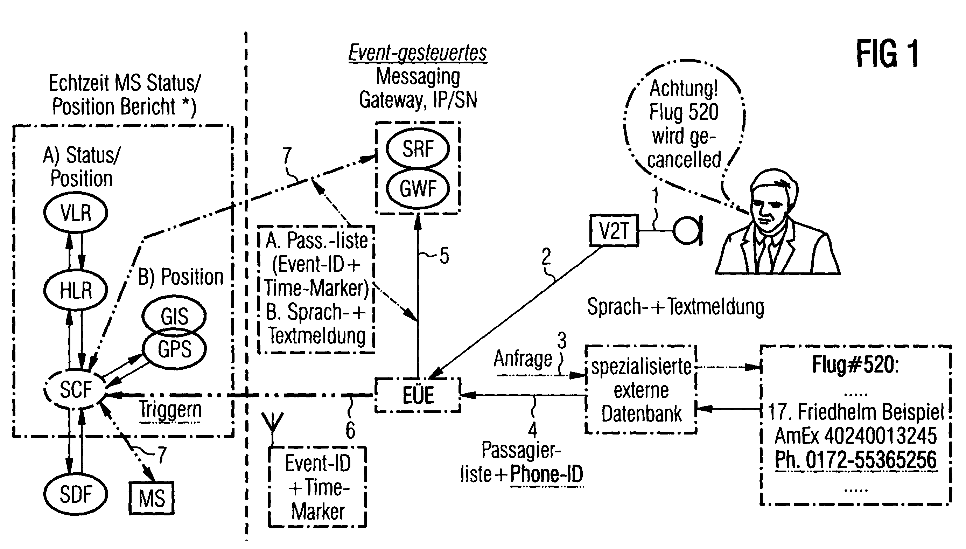

In Figur 1 wird der erfindungsgemäße Informationsdienst in einer ersten Ausgestaltungsform, event-gesteuert, am Beispiel eines Flug-Informationsdienstes dargestellt.
Das auslösende Ereignis ist der Flug #520 der storniert wird. Im Flughafen wird dies beispielsweise durch Sprachansagen, 1, zur Kenntnis gegeben. Die Ansage wird als Sprachmeldung abgespeichert, beispielsweise digital. Ein Spracherkennungsmodul kann diese Sprachmeldung aber auch in eine Textnachricht umgesetzt werden, V2T, wenn dies für die Ausgabe an einem entsprechenden Endgerät (beispielsweise SMS an ein Mobiltelefon, Faxnachricht, E-Mail) vorteilhaft ist.
Die Text- oder Sprachnachricht wird an eine zentrale Überwachungseinheit EÜE gemeldet, 2. Diese Überwachungseinheit analysiert die Nachricht und stellt eine Anfrage an eine spezialisierte externe Datenbank, 3, die beispielsweise vom Flughafen oder der Fluggesellschaft angeboten wird, um sich die zu dem gecancelten Flug #520 gehörenden Informationen abzufragen, 4. Diese Datenbank enthält also Kommunikationsinformationen, insbesondere die Telefonnummern der Passagiere.
Anschließend erstellt die Überwachungseinheit EÜE eine Auftragsliste von Passagieren, die auch Dienst-Teilnehmer sind und daher mit einer Nachricht versorgt werden sollen. Die Auftragsliste wird dann von der Überwachungseinheit mit einem Identifizierungsmerkmal (eine eindeutige Nummer, Event-ID) und einem Zeitstempel versehen und zusammen mit der Sprach- oder Textnachricht an das ereignisgesteuerte Nachrichten-Gateway IP/SN weitergeleitet, 5.
Eine Instanz in dem Telekommunikationsnetz übernimmt dann die weitere Steuerung des Informationsdienstes: eine Dienstesteuerfunktion SCF erhält von der Überwachungseinheit EÜE das Identifizierungsmerkmal und den Zeitstempel der Auftragsliste, 6. Allen betroffenen Fluggäste MS des Fluges #520 wird dann die neue Fluginformation mit Hilfe der ermittelten Kommunikationsinformation zugestellt. Dabei ist es Aufgabe der Dienstesteuerstation, den geeigneten Kommunikationsweg zu wählen: on- oder oft-line, sogenannte 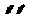 Hunting-Listen" etc.

Zusätzlich können Informationen über den Status und die Position des gesuchten Teilnehmers ermittelt werden: über das Heimat- und Besucherregister des Mobilfunknetzes (in welcher Funkzelle befindet sich der Teilnehmer gerade) oder über zusätzliche Hilfsmittel wie das Global Positioning System GPS. Hilfreich bei der Positionsbestimmung ist es, wenn das Mobilfunksystem den Standard CAMEL (Customized applications for mobile network enhanced logic) unterstützt.

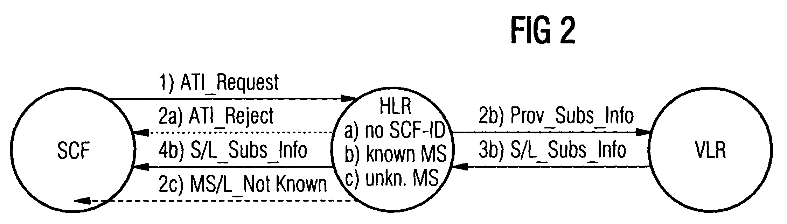

Figur 2 beschreibt die Kommunikation zwischen der Dienstesteuerfunktion SCF und dem Heimat- bzw Besucherregister HLR, VLR, wenn Informationen über den Status und den Standort des Teilnehmers ausgetauscht werden, mit Hilfe von CAMEL Phase 1. Ein CAMEL basierter Dienst kann periodisch von der Dienstesteuerfunktion SCF beim Heimatregister HLR Informationen abfragen. Dies geschieht mit einem sogenannten Any_Time_Interrogation Request, 1. Ist die SCF-Identität beim HLR nicht bekannt, oder ist der Diensteanbieter beim Netzbetreiber nicht bekannt, so wird die Anfrage abgelehnt, ATI_Reject, 2a. Ist die Mobilstation MS beim HLR bekannt, so wird mittels Provide_Subscriber_Info das betroffene VLR informiert, 2b.
Ist die Mobilstation nicht bekannt im HLR, oder ist die aktuelle Position nicht bekannt, dann wird diese Information ebenfalls an die Dienstesteuerstation weitergeleitet, 2c.

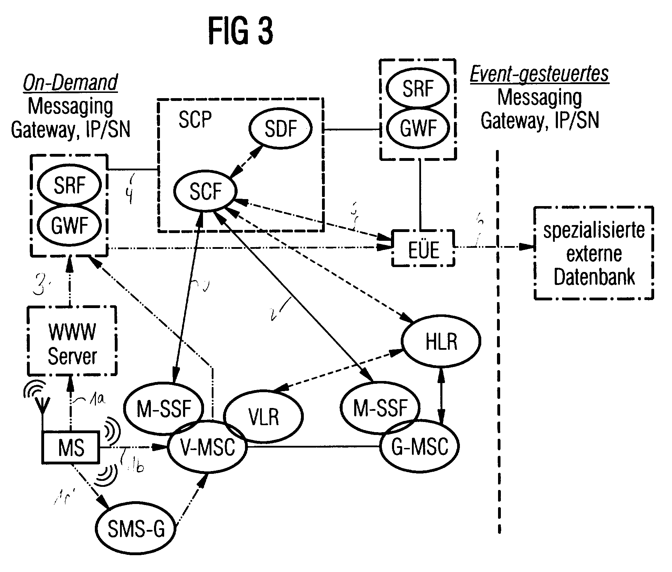

In Figur 3 wird eine weitere Ausgestaltungsform des Informationsdienstes beschrieben: das auslösende Ereignis ist diesmal die Bestellung der Fluginformation durch den betroffenen Teilnehmer selber, beispielsweise via Mobiltelefon, oder PDA, in einem beliebigen Format, wie SMS, E-Mail oder Sprache.
Der Teilnehmer MS wählt dabei eine spezielle Dienstenummer, 1a, 1b, 1c. Die Eingabe erfolgt über die Tastatur (Dial Tone Multiple Frequency DTMF), als Dienst-Nummer oder auch Menügesteuert,, oder auch sprachgesteuert (voice activated dialing), mit spezieller Spracherkennung beispielsweise in einer Intelligent Peripheral Instanz des Intelligenten Netzes.

Die Mobilvermittlungsstelle MSC teilt den Dienstaufruf der Dienstesteuerfunktion SCF mit (Dienst-Kennung, Kommunikationsadresse wie Telefonnummer oder HTML Adresse etc.), 2. Der Dienst-Bedarf wird auf die Bestätigung der SCF im Messaging Gateway abgespeichert, 3. Diese versieht den Dienstaufruf mit einem Identifizierungsmerkmal (Demand-Nr), die sie der Dienstesteuerfunktion SCF mitteilt, 4. Anschließend übermittelt die Dienstesteuerfunktion SCF diese Demand-Nr. mit der Kommunikationsadresse des Teilnehmers und eventuell einem Zeitstempel an die Überwachungseinheit EÜE, 5.
Das EÜE ruft die abgespeicherte Anfrage des Dienstteilnehmers ab, bei Sprachanforderungen muß gegebenenfalls eine Übersetzung in ein Textformat durchgeführt werden. Anschließend wird die Suche nach der gewünschten Fluginformation in der spezialisierten externen Datenbank initialisiert, 6. Sobald die gewünschte Information gefunden wurde, wird in dem Verfahren weiter vorgegangen, wie bereits bei Figur 1 beschrieben.

Die Auftragserteilung von der EÜE an die Datenbank und die Informationsweitergabe nach Ermittlung kann online oder auch offline erfolgen. Im zweiten Fall wird nach Übermittlung der Anfrage die Verbindung abgebaut und bei Informationsübertragung erst wieder neu aufgebaut. Hierbei werden wichtige Informationen wird das Identifizierungsmerkmal (Demand-Nr) und weitere Informationen wie der Zeitstempel ebenfalls genutzt (auch in Abhängigkeit der gewünschten Aktualität der Informationen, die beispielsweise im Teilnehmerprofil enthalten sein kann).

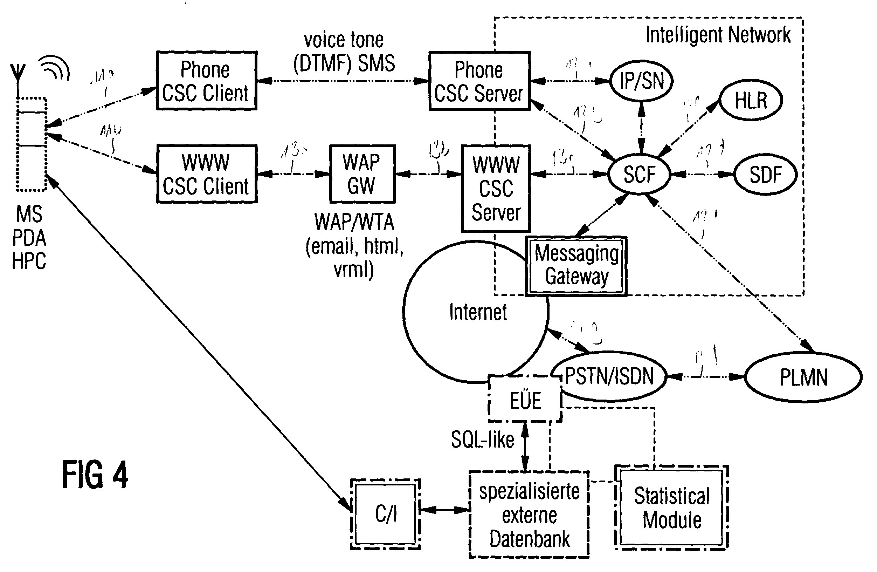

Figur 4 beschreibt eine erweiterte Ausführungsform des erfindungsgemäßen Informationsdienstes.

Die wesentliche Idee ist die Ergänzung des erfindungsgemäßen Informations-Dienstes mit weiteren eigenständigen Zusatzdiensten. Im beschriebenen Fall des Flug-Auskunftsdienstes kann dann beispielsweise eine Buchung auf einen Flug durchgeführt werden, eine Umbuchung, Stornierung, Bezahlung oder auch der Vorgang des Eincheckens, der momentan noch vor Ort am Flughafen, beim Bodenpersonal oder in dafür vorgesehenen Automaden, durchgeführt wird.
Dies ist vorteilhaft, weil zeitliche, lokale und informative Voraussetzungen nicht mehr bindend sind, beispielsweie Öffnungszeiten oder die Bezahlung mit Kreditkarte oder per Rechnung.
Ein Dienstteilnehmer gibt über sein Endgerät, MS, PDA, Informationen (also beispielsweise einen Flugbuchungswunsch) ein, 11a, 11b. Diese Informationen können verschiedene Komponenten beinhalten, beispielsweise eine Flugnummer, Datum und Uhrzeit, Personenzahl, Preislimit, usw. In einer weiteren Ausführungsform kann der Teilnehmer die notwendigen Informationen auch zuvor abrufen, wie bei Figur 3 bereits beschrieben. Die Eingabe kann wiederum On-Line oder auch Off-Line erfolgen.
Folgendermaßen werden die Informationen dann weitergeleitet:
- Über das Intelligente Netz (Intelligent Network) wo sie mit einem Identifizierungskennzeichen versehen werden zu der Überwachungseinheit EÜE, siehe 12 a bis 12g oder
- Über ein Datennetz wie das Internet: mittels WAP/WTA etc. Zunächst wird die Information vom Endgerät über einen geeigneten Client an ein WAP Gateway gegeben. Das WAP Gateway gegeben. Das WAP Gateway holt sich die Kommunikationsinformation (Telefonnummer des Teilnehmers) von SCF/SDF/HLR.
   Im WWW CSC wird die Kommunikationsinformation in eine IP Adresse umgewandelt, entweder via NumberTranslation Tabelle oder es wird eine temporäre Internet-Adresse umgewandelt. Dann wird die Information an die Überwachungsinstanz EÜE übergeben, 13a, 13b, 13c.

Solcherart an die Überwachungsinstanz gelangte Information wird wiederum mit einer Identifikationsnummer versehen und einem Zeitstempel, und dann an die spezialisierte externe Datenbank, beispielsweise über eine SQL-Schnittstelle.
Die abgeglichene Information gelangt über den gleichen Weg zurück an den Netzteilnehmer. Menügesteuert kann der Teilnehmer dann seine Eingaben machen, die Buchungsbestätigung gelangt später zur Datenbank (inklusive Zeitstempel und Identifikationsnummer).
Ebenso wird mit einer Änderung oder einem Storno der Transaktion verfahren. Hier ist die Überprüfung des Zeitstempels eine vorteilhafte Ausgestaltung, um die Gültigkeit einer Transaktion zu überprüfen.

In einer weiteren Ausgestaltungsform existiert zur Datenbank eine Statistische Erfassungseinheit (Statistical Module). Hiermit können Regelmäßigkeiten im Flugverhalten des Teilnehmers erkannt werden. In Abhängigkeit von den Analyse-Ergebnissen können dem Dienstteilnehmer dann bereits vorbereitete Vorschläge gesendet werden, die dieser nur annehmen oder ablehnen muss, bzw. ändern kann.

Einen erfolgreichen Buchungsvorgang kann der Dienstenutzer später beispielsweise auf seiner Telefon-Abrechnung bestätigt finden, oder auf der Kreditkartenabrechnung.

In der Regel ist die Durchführung des erweiterten Dienstes mit einem Zahlungsvorgang verknüpft. Diese kann zeitlich versetzt erfolgen (in Abhängigkeit von dem Zeitstempel, der Identifikationsnummer), auch in Abhängigkeit des gewünschten Dienstes, also beispielsweise zwei Wochen vor Antritt des gebuchten Fluges. Hier kann in Abhängigkeit von der Zahlung eine gewünschter Flugreservierung wieder rückgängig gemacht werden.

Insbesondere bei einem Flug-Informationsdienst ist eine weitere Ausgestaltungsform vorteilhaft. Das Einchecken des Fluggastes am Flughafen, entweder an einem Schalter oder an einem Automaten, kann entfallen, wenn eine gebuchter Flug in der gleichen Weise von dem Fluggast bestätigt werden kann.

## Patentansprüche

1. Verfahren zum Verteilen von kommunikationsunabhängiger Informationen an eine Auswahl von Teilnehmern in einem TelekommunikationsnetZ bei dem
- das Auftreten eines definierten auslösenden Ereignisses außerhalb des Telekommunikationsnetzes gemeldet wird (1, 2),
- aus einer zu diesem Ereignis gehörigen Datenbank geeignete Kommunikationsinformation zu Teilnehmern des Telekommunikationsnetzes ausgewählt wird (3, 4), die zu dem auslösenden Ereignis assoziiert sind, und
- aus dieser Kommunikationsinformation eine Auftragsliste erstellt wird (5),
- zu den in der Auftragsliste enthaltenen Teilnehmern eine Verbindung aufgebaut wird (6, 7).

2. Verfahren nach Patentanspruch 1,
dadurch gekennzeichnet, dass
nach dem Verbindungsaufbau den Teilnehmern eine Sprach- und/oder Textnachricht übermittelt wird.

3. Verfahren nach einem der vorigen Patentansprüche,
dadurch gekennzeichnet, dass
ein Teilnehmer, zu dem aufgrund der ersten Kommunikationsinformation in der Auftragsliste keine Verbindung aufgebaut werden konnte, aufgrund zweiter Kommunikationsinformation zu diesem Teilnehmer im Telekommunikationsnetz eine Verbindung aufgebaut wird.

4. Verfahren nach einem der vorigen Patentansprüche,
dadurch gekennzeichnet, dass
die Auftragsliste eine zusätzliche Zeitinformation enthält, welche das auslösende Ereignis betrifft.

5. Verfahren nach einem der vorigen Patentansprüche,
dadurch gekennzeichnet, dass
die in der Datenbank enthaltene, geeignete Kommunikationsinformation von dem betroffenen Teilnehmer selber eingegeben wird.

6. Verfahren nach einem der vorigen Patentansprüche,
dadurch gekennzeichnet, dass
das definierte auslösende Ereignis von dem betroffenen Teilnehmer selber erzeugt wird.

7. Verfahren nach einem der vorigen Patentansprüche,
dadurch gekennzeichnet, dass
Posititionsinformation über den Teilnehmer ermittelt und diese verwendet.

8. Verfahren nach einem der vorigen Patentansprüche,
dadurch gekennzeichnet, dass
nach Aufbau einer Verbindung weitere Aktionen ausgelöst werden, die abhängig sind von dem Inhalt der kommunikationsunabhängigen Information.

9. Verfahren nach einem der Patentansprüche 5 bis 8,
dadurch gekennzeichnet, dass
das Verhalten des Teilnehmers erfaßt und ausgewertet wird, und diese Statistikinformation bei folgenden Transaktionen berücksichtigt wird.

10. Vorrichtung zum Verteilen von Informationen an eine Auswahl von Teilnehmern in einem Telekommunikationsnetz, mit
- Speichermitteln (spezialisierte externe Datenbank), die Teilnehmerinformationen enthalten, und
- einer Überwachungseinheit (EueE), die das Auftreten eines Ereignisses überwacht, und
- Mittel zum Erzeugen einer Auftragsliste, und
- einem Nachrichten-Gateway mit einer Verbindung zu einem Kommunikationsnetz zum Aufbau einer Verbindung.

11. Vorrichtung nach Patentanspruch 9
dadurch gekennzeichnet, dass
der Datenbank eine statistische Auswertungseinheit zugeordnet ist, die teilnehmerabhängige Transaktionsdaten ermittelt.

12. Vorrichtung nach einem der Patentansprüche 9 oder 10,
dadurch gekennzeichnet, dass
Mittel zur Ermittlung der Position des Teilnehmers existieren, welche die Auswahlkriterien für Information aus den Speichermitteln beeinflussen.
